# EUROPEAN PATENT APPLICATION

(11) **EP 4 693 868 A1**
(43) Date of publication of application: **11.02.2026**
(21) Application number: 24876012.6
(22) Date of filing: 16.05.2024
(51) Int. Cl.: H02M 3/158, H02J 7/00

(54) **BUCK CONVERTER AND ELECTRONIC DEVICE**

(30) Priority: 11.10.2023 CN 202322730781 U
(71) Applicant: Huawei Technologies Co., Ltd., Shenzhen, Guangdong 518129 (CN)
(72) Inventor: WANG, Neng, Shenzhen, Guangdong 518129 (CN); ZHOU, Zhuomin, Shenzhen, Guangdong 518129 (CN); LUO, Yuchen, Shenzhen, Guangdong 518129 (CN)
(74) Representative: Epping - Hermann - Fischer
(86) International application number: PCT/CN2024/093707
(87) International publication number: WO 2025/077185

(57) **Abstract**

Embodiments of this application provide a BUCK converter and an electronic device, and relate to the field of BUCK converter technologies. The BUCK converter is used in the electronic device. The electronic device includes a silicon-based negative electrode battery and a load, and the silicon-based negative electrode battery is electrically connected to the load through the BUCK converter. The BUCK converter includes a first switching transistor, a second switching transistor, and an energy storage component. A first end of the first switching transistor is electrically connected to the silicon-based negative electrode battery, a second end of the first switching transistor is electrically connected to a first end of the energy storage component and a first end of the second switching transistor, and a second end of the energy storage component is electrically connected to a second end of the second switching transistor. The first switching transistor and the second switching transistor are configured to control charging or discharging of the energy storage component. Both the first switching transistor and the second switching transistor are N-channel-type metal-oxide semiconductor field-effect transistors. This can reduce on-resistance of the first switching transistor and the second switching transistor, thereby reducing a loss of the BUCK converter, especially when an output voltage of the silicon-based negative electrode battery is low.

## Description

This application claims priority to Chinese Patent Application No. 202322730781.7, filed with the China National Intellectual Property Administration on October 11, 2023 and entitled "BUCK CONVERTER AND ELECTRONIC DEVICE", which is incorporated herein by reference in its entirety.

### TECHNICAL FIELD

Embodiments of this application relate to the field of BUCK converter technologies, and in particular, to a BUCK converter and an electronic device.

### BACKGROUND

In a related technology, an electronic device usually includes a BUCK converter, configured to implement a direct current-direct current buck conversion. However, a loss of the BUCK converter is large, adversely affecting performance of the BUCK converter.

### SUMMARY

Embodiments of this application provide a BUCK converter and an electronic device, to reduce on-resistance of a switching transistor in the BUCK converter, to reduce a loss of the BUCK converter.

According to an aspect, an embodiment of this application provides a BUCK converter. The BUCK converter is used in the electronic device. The electronic device includes a silicon-based negative electrode battery and a load, where the silicon-based negative electrode battery is electrically connected to an input end of the BUCK converter, and an output end of the BUCK converter is electrically connected to the load. The BUCK converter includes a first switching transistor, a second switching transistor, and an energy storage component. A first end of the first switching transistor is electrically connected to the silicon-based negative electrode battery, a second end of the first switching transistor is electrically connected to a first end of the energy storage component and a first end of the second switching transistor, and a second end of the energy storage component is electrically connected to a second end of the second switching transistor. The energy storage component is electrically connected to the load, and the first switching transistor and the second switching transistor are configured to control charging or discharging of the energy storage component. Both the first switching transistor and the second switching transistor are N-channel-type metal-oxide semiconductor field-effect transistors.

In this embodiment of this application, both the first switching transistor and the second switching transistor are set as N-channel-type metal-oxide semiconductor field-effect transistors, and on-resistance of the N-channel-type metal-oxide semiconductor field-effect transistor is small. Compared with the related technology in which the first switching transistor is set as a P-channel-type metal-oxide semiconductor field-effect transistor, a loss and a heat dissipation amount of the BUCK converter can be reduced, especially when an output voltage of the silicon-based negative electrode battery is low, and a current flowing through the BUCK converter is large, the loss and the heat dissipation amount of the BUCK converter can be reduced, and circuit efficiency of the BUCK converter can be improved. In addition, switching efficiency of the N-channel-type metal-oxide semiconductor field-effect transistor is high, thereby improving switching efficiency of the switching transistors (including the first switching transistor and the second switching transistor), and enhancing use performance of the BUCK converter.

In some possible implementations, the BUCK converter further includes a control device, where a first output end of the control device is electrically connected to a control end of the first switching transistor, and a second output end of the control device is electrically connected to a control end of the second switching transistor. With such deposition, the control device can control the first switching transistor to be turned on or off, and the control device can control the second switching transistor to be turned on or off, so that the first switching transistor and the second switching transistor can control charging or discharging of the energy storage component.

In some possible implementations, the BUCK converter further includes a BUCK power supply, and the BUCK power supply is electrically connected to a power supply input end of the control device. With such deposition, the BUCK power supply can supply power to the control device, so that the control device can control the first switching transistor and the second switching transistor to be turned on or off.

In some possible implementations, the BUCK converter further includes a drive circuit, the drive circuit is electrically connected to the BUCK power supply and the control device, and the BUCK power supply provides a drive voltage for the control device through the drive circuit. With such deposition, the control device can provide a drive voltage for the control ends of the switching transistors (including the first switching transistor and the second switching transistor), to control the switching transistors (including the first switching transistor and the second switching transistor) to be turned on.

In some possible implementations, an output voltage of the BUCK power supply is greater than the output voltage of the silicon-based negative electrode battery. With such deposition, the BUCK power supply can provide a high-level voltage for the control device, so that the control device can control the switching transistors (including the first switching transistor and the second switching transistor) to be turned on.

In some possible implementations, the drive circuit includes a diode and a second capacitor. An anode of the diode is electrically connected to the BUCK power supply, a cathode of the diode is electrically connected to a drive input end of the control device and a first end of the second capacitor, and a second end of the second capacitor is electrically connected to the second end of the first switching transistor. With such deposition, the BUCK power supply can provide a high-level drive voltage for the control device, so that the control device can provide a high-level drive voltage for the control ends of the switching transistors (including the first switching transistor and the second switching transistor), and the control device can control the switching transistors (including the first switching transistor and the second switching transistor) to be turned on. In addition, a risk that a current flows in a direction from the second capacitor to the diode is reduced, and use reliability of the BUCK converter is provided.

In some possible implementations, the BUCK converter further includes a first capacitor. A first end of the first capacitor is electrically connected to the second end of the energy storage component and a first end of the load, and a second end of the first capacitor is electrically connected to a second end of the load and the second end of the second switching transistor. With such deposition, the first capacitor can implement a voltage regulation function, to improve stability of an output voltage of the BUCK converter.

In some possible implementations, the energy storage component includes an inductor. With such deposition, the silicon-based negative electrode battery can charge the inductor, and the inductor can discharge to the load. A structure is simple, and costs of the BUCK converter are reduced.

According to another aspect, an embodiment of this application provides an electronic device. The electronic device includes a silicon-based negative electrode battery, a BUCK converter, and a load. The silicon-based negative electrode battery is electrically connected to an input end of the BUCK converter, and an output end of the BUCK converter is electrically connected to the load.

The electronic device provided in this embodiment of this application includes the foregoing BUCK converter, and therefore has all beneficial effect of the foregoing BUCK converter. Details are not described herein again.

In some possible implementations, a minimum operating voltage of the silicon-based negative electrode battery is less than 3.2 V. With such deposition, compared with setting an output voltage of the silicon-based negative electrode battery to be greater than or equal to 3.2 V, the silicon-based negative electrode battery can provide more electric energy for the load, so that a standby time of the electronic device is prolonged, enhancing use performance of the electronic device.

### BRIEF DESCRIPTION OF DRAWINGS

FIG. 1 is a diagram of a structure of an electronic device according to some embodiments of this application;
FIG. 2 is a diagram of a connection relationship of an electronic device according to some embodiments of this application;
FIG. 3 is a schematic of a circuit topology of a BUCK converter according to some embodiments of this application;
FIG. 4 is a schematic of a circuit topology of a BUCK converter according to some other embodiments of this application; and
FIG. 5 is a schematic of a circuit topology of a BUCK converter according to still some other embodiments of this application.

### DESCRIPTION OF EMBODIMENTS

The following clearly and completely describes technical solutions in some embodiments of this application with reference to accompanying drawings. It is clear that the described embodiments are merely some rather than all of embodiments of this application. All other embodiments obtained by a person of ordinary skill in the art based on embodiments of this application shall fall within the protection scope of this application.

Unless otherwise required in the context, throughout the entire specification and claims, the term "include" and other forms of the term, for example, a third person singular form "includes" and a present participle form "including" are interpreted as "open and inclusive", that is, "include but not limited to". In the description of this specification, terms such as "an embodiment", "some embodiments", "example embodiments", "examples", "particular example", or "some examples" are intended to indicate that a specific feature, a structure, a material, or a characteristic related to the embodiment or example is included in at least one embodiment or example of this application. The schematic representations of the foregoing terms do not necessarily mean a same embodiment or example. Further, the particular feature, structure, material, or characteristic may be included in any one or more embodiments or examples in any appropriate manner.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of embodiments of this application, unless otherwise specified, "a plurality of" means two or more than two.

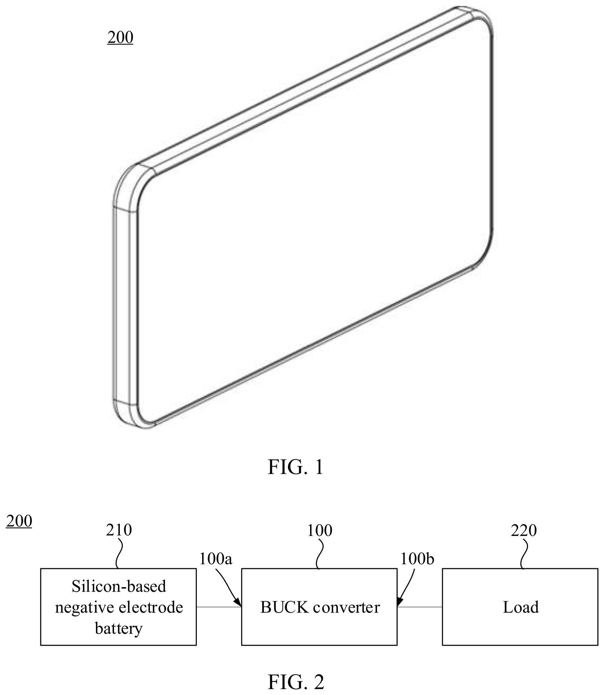

FIG. 1 is a diagram of a structure of an electronic device according to some embodiments of this application. FIG. 2 is a diagram of a connection relationship of the electronic device according to some embodiments of this application.

As shown in FIG. 1, an embodiment of this application provides an electronic device 200. For example, the electronic device 200 may be a terminal device, for example, a mobile phone, a tablet computer, or a smart band. It may be understood that a type of the electronic device 200 is not further limited in this embodiment of this application.

In some examples, as shown in FIG. 2, the electronic device 200 may include a silicon-based negative electrode battery 210, a BUCK (buck circuit) converter 100, and a load 220. That is, the BUCK converter 100 may be used for the electronic device 200. The silicon-based negative electrode battery 210 is electrically connected to an input end 100a of the BUCK converter 100. An output end 100b of the BUCK converter 100 is electrically connected to the load 220.

The silicon-based negative electrode battery 210 is a lithium battery whose negative-electrode material is silicon. The silicon-based negative electrode battery 210 is electrically connected to the input end 100a of the BUCK converter 100, so that the silicon-based negative electrode battery 210 can output a direct current to the BUCK converter 100. For example, the silicon-based negative electrode battery 210 may output a direct current of approximately 4 V (unit: volt) to the BUCK converter 100, or the silicon-based negative electrode battery 210 may output a direct current of another voltage value to the BUCK converter 100. It may be understood that, as electric energy stored in the silicon-based negative electrode battery 210 continuously decreases, a battery voltage (battery voltage, VBAT for short) of the silicon-based negative electrode battery 210 gradually decreases.

The BUCK converter 100 can perform direct current-direct current (Direct Current, DC for short) buck conversion. That is, the BUCK converter 100 can perform buck processing on a direct current voltage from the silicon-based negative electrode battery 210. An output end 100b of the BUCK converter 100 is electrically connected to the load 220, so that the BUCK converter 100 can provide, to the load 220, a direct current obtained through buck processing, to meet an operating requirement of the load 220. For example, the BUCK converter 100 may provide a direct current of approximately 3 V to the load 220, or the BUCK converter 100 may provide a direct current of another voltage value to the load 220. It may be understood that a value of an output voltage of the silicon-based negative electrode battery 210 and a value of a direct current voltage provided by the BUCK converter 100 for the load 220 are not further limited in this embodiment of this application.

For example, when power of the load 220 changes, an operating voltage of the load 220 changes. An output voltage of the BUCK converter 100 can change with a change of the operating voltage of the load 220, so that the load 220 can work normally.

In some examples, the load 220 may include components such as a display, an audio component, a radio frequency component, and a system on chip (System On Chip, SOC for short). The system on chip may include a chip, for example, a central processing unit (Central Processing Unit, CPU for short), a graphics processing unit (Graphics Processing Unit, GPU for short), or a storage chip. There may be a plurality of loads 220, and types of the plurality of loads 220 may be the same or may be different.

When there are a plurality of loads 220, operating voltages of the plurality of loads 220 may be the same or different. When the operating voltages of the plurality of loads 220 are different, there may be a plurality of BUCK converters 100. One BUCK converter 100 may provide an operating voltage for one load 220, or one BUCK converter 100 may alternatively provide an operating voltage for at least two loads 220 with a same operating voltage, to meet operating requirements of the plurality of loads 220.

In some examples, a minimum operating voltage of the silicon-based negative electrode battery 210 is less than 3.2 V.

It may be understood that the minimum operating voltage of the silicon-based negative electrode battery 210 is a minimum voltage at which the silicon-based negative electrode battery 210 can work. When the battery voltage of the silicon-based negative electrode battery 210 is greater than or equal to the minimum operating voltage of the silicon-based negative electrode battery 210, electric energy provided by the silicon-based negative electrode battery 210 can meet the operating requirement of the load 220, and the electronic device 200 can run normally. On the contrary, when the battery voltage of the silicon-based negative electrode battery 210 is less than the minimum operating voltage of the silicon-based negative electrode battery 210, the electric energy provided by the silicon-based negative electrode battery 210 cannot meet the operating requirement of the load 220, and the electronic device 200 is in a turn-off state.

In this way, compared with setting the output voltage of the silicon-based negative electrode battery 210 to be greater than or equal to 3.2 V, setting the minimum operating voltage of the silicon-based negative electrode battery 210 to be less than 3.2 V enables the silicon-based negative electrode battery 210 to provide more electric energy for the load 220, so that a standby time of the electronic device 200 is prolonged, enhancing use performance of the electronic device 200.

In some examples, a manner of adding another functional circuit (for example, a boost circuit) may be used, so that the minimum operating voltage of the silicon-based negative electrode battery 210 can be less than 3.2 V.

For example, the minimum operating voltage of the silicon-based negative electrode battery 210 may be 3.0 V, 2.8 V, 2.5 V, 2.3 V, or the like.

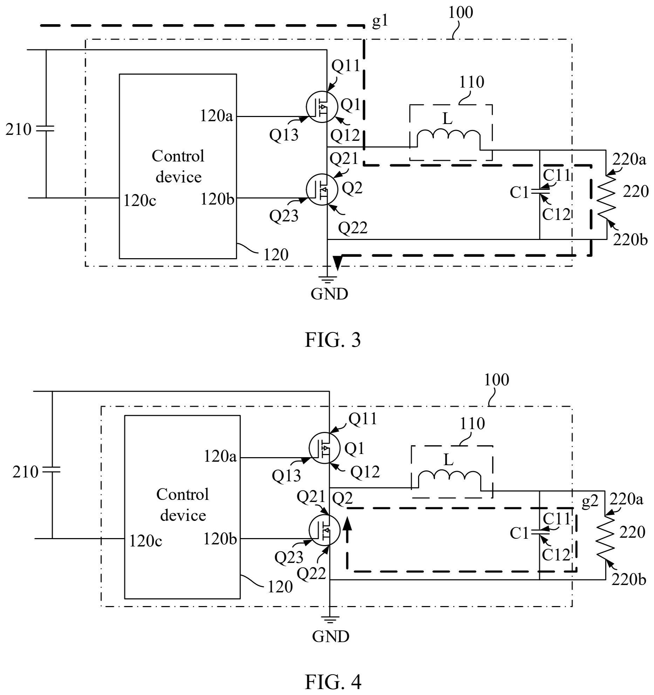

FIG. 3 is a schematic of a circuit topology of a BUCK converter according to some embodiments of this application. FIG. 4 is a schematic of a circuit topology of a BUCK converter according to some other embodiments of this application. A difference between FIG. 3 and FIG. 4 is that arrows in different directions are used to show different current flow directions. With reference to FIG. 3 and FIG. 4, the following uses examples to describe a circuit structure of the BUCK converter 100 in some implementations of this application.

In some examples, as shown in FIG. 3 and FIG. 4, the BUCK converter 100 may include a first switching transistor Q1, a second switching transistor Q2, and an energy storage component 110. A first end Q11 of the first switching transistor Q1 is electrically connected to the silicon-based negative electrode battery 210, a second end Q12 of the first switching transistor Q1 is electrically connected to a first end of the energy storage component 110 and a first end Q21 of the second switching transistor Q2, and a second end of the energy storage component 110 is electrically connected to a second end Q22 of the second switching transistor Q2. For example, after the second end of the energy storage component 110 is electrically connected to the second end Q22 of the second switching transistor Q2, the second end of the energy storage component 110 may be electrically connected to a ground end GND. As shown in FIG. 3 and FIG. 4, the energy storage component 110 is electrically connected to the load 220. It may be understood that the first switching transistor Q1 and the second switching transistor Q2 are configured to control charging or discharging of the energy storage component 110.

For example, the first switching transistor Q1 and the second switching transistor Q2 may be metal-oxide-semiconductor field-effect transistors (Metal-Oxide-Semiconductor Field-Effect Transistor, MOSFET for short). One of the first end Q11 of the first switching transistor Q1 and the second end Q12 of the first switching transistor Q1 is a source of the MOSFET transistor, and the other one is a drain of the MOSFET transistor. One of the first end Q21 of the second switching transistor Q2 and the second end Q22 of the second switching transistor Q2 is a source of the MOSFET transistor, and the other one is a drain of the MOSFET transistor.

It may be understood that the first switching transistor Q1 and the second switching transistor Q2 may be alternately turned on, so that the energy storage component 110 can be charged or discharged. The energy storage component 110 is electrically connected to the load 220. In this way, the BUCK converter 100 can provide a stable direct current voltage for the load 220.

For example, when the first switching transistor Q1 is turned on, and the second switching transistor Q2 is turned off, as shown by a direction of an arrow g1 in FIG. 3, a current can flow in a direction from the silicon-based negative electrode battery 210, through the first switching transistor Q1, the energy storage component 110, and the load 220, to the ground end GND, so that the silicon-based negative electrode battery 210 can charge the energy storage component 110 through the first switching transistor Q1, and the silicon-based negative electrode battery 210 can supply power to the load 220 through the first switching transistor Q1. When the first switching transistor Q1 is turned off, and the second switching transistor Q2 is turned on, as shown by a direction of an arrow g2 in FIG. 4, a current can flow in a direction from the energy storage component 110, through the load 220, to the second switching transistor Q2, and the energy storage component 110 discharges, so that the energy storage component 110 can supply power to the load 220.

It may be understood that a turn-on time of the first switching transistor Q1 is controlled, so that an output voltage of the BUCK converter 100 can be controlled. A longer turn-on time of the first switching transistor Q1 indicates a larger output voltage of the BUCK converter 100; and a shorter turn-on time of the first switching transistor Q1 indicates a smaller output voltage of the BUCK converter 100.

In some examples, as shown in FIG. 3 and FIG. 4, the BUCK converter 100 may further include a first capacitor C1. A first end C11 of the first capacitor C1 is electrically connected to the second end of the energy storage component 110 and a first end 220a of the load 220, and a second end C12 of the first capacitor C1 is electrically connected to a second end 220b of the load 220 and the second end Q22 of the second switching transistor Q2. That is, the energy storage component 110 is electrically connected to the load 220 through the first capacitor C1, and the first capacitor C1 is connected in parallel to the load 220.

For example, when the first switching transistor Q1 is turned on, the silicon-based negative electrode battery 210 can supply power to the energy storage component 110, the first capacitor C1, and the load 220; and when the first switching transistor Q1 is turned off, the energy storage component 110 can charge the first capacitor C1. In this way, voltages at both ends of the first capacitor C1 can be maintained stable or approximately stable. Because the first capacitor C1 is connected in parallel to the load 220, the BUCK converter 100 can provide a stable direct current voltage for the load 220. It may be understood that voltage values at both ends of the first capacitor C1 are less than a voltage value of an output voltage of the silicon-based negative electrode battery 210, so that the BUCK converter 100 can implement DC-DC buck conversion.

That is, the foregoing disposing manner is used, so that the first capacitor C1 can implement a voltage regulation function, to improve stability of the output voltage of the BUCK converter 100.

In some examples, the first capacitor C1 may be a ceramic capacitor (Multi-layer Ceramic Capacitors, MLCC for short).

In some examples, as shown in FIG. 3 and FIG. 4, the energy storage component 110 includes an inductor L.

With such deposition, the silicon-based negative electrode battery 210 can charge the inductor L, and the inductor L can discharge to the load 220. A structure is simple, and costs of the BUCK converter 100 are reduced.

In some implementations, the first switching transistor Q1 is an N-channel-type MOSFET (N MOS for short), and the second switching transistor Q2 is a P-channel-type MOSFET (P MOS for short).

The inventor of this application finds that on-resistance of the PMOS is large, so that a heat dissipation amount of the P MOS is large, causing problems such as a large loss and a large heat dissipation amount of the BUCK converter 100. When the output voltage of the silicon-based negative electrode battery 210 is low, the input voltage of the BUCK converter 100 decreases, and when running power of the load 220 remains unchanged, a current flowing through the BUCK converter 100 increases. In this way, a loss and the heat dissipation amount of the P MOS are further increased, causing the problems such as the large loss and the large heat dissipation amount of the BUCK converter 100 to be more serious. In addition, a switching rate of the PMOS is low. This affects performance of the BUCK converter 100.

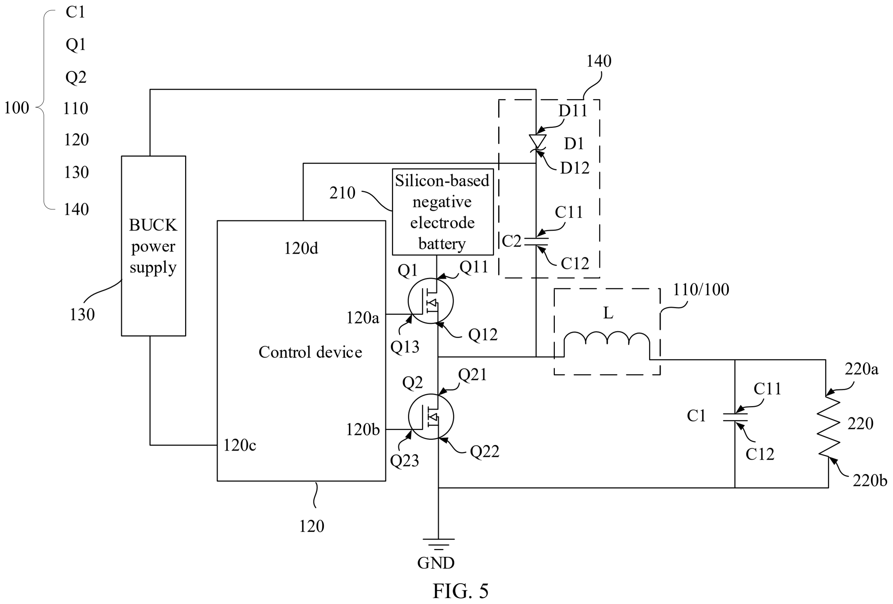

FIG. 5 is a schematic of a circuit topology of a BUCK converter according to still some other embodiments of this application.

Based on this, as shown in FIG. 5, an embodiment of this application provides a BUCK converter 100. The BUCK converter 100 may include the first switching transistor Q1, the second switching transistor Q2, and the energy storage component 110. The first end Q11 of the first switching transistor Q1 is electrically connected to the silicon-based negative electrode battery 210, the second end Q12 of the first switching transistor Q1 is electrically connected to the first end of the energy storage component 110 and the first end Q21 of the second switching transistor Q2, and the second end of the energy storage component 110 is electrically connected to the second end Q22 of the second switching transistor Q2. The first switching transistor Q1 and the second switching transistor Q2 are configured to control charging or discharging of the energy storage component 110.

The first switching transistor Q1, the second switching transistor Q2, the energy storage component 110, and the like are described by using examples in embodiments corresponding to FIG. 3 and FIG. 4 in this application. Details are not described herein again.

In some examples, as shown in FIG. 5, both the first switching transistor Q1 and the second switching transistor Q2 are N-channel-type metal-oxide semiconductor field-effect transistors.

It may be understood that both the first switching transistor Q1 and the second switching transistor Q2 are set as the N-channel-type metal-oxide semiconductor field-effect transistors, on-resistance of the N-channel-type metal-oxide semiconductor field-effect transistor is small. Compared with the related technology in which the first switching transistor Q1 is set as a P-channel-type metal-oxide semiconductor field-effect transistor, a loss and a heat dissipation amount of the BUCK converter 100 can be reduced, especially when an output voltage of the silicon-based negative electrode battery 210 is low, and a current flowing through the BUCK converter 100 is large, the loss and the heat dissipation amount of the BUCK converter 100 can be reduced, and circuit efficiency of the BUCK converter 100 can be improved. In addition, switching efficiency of the N-channel-type metal-oxide semiconductor field-effect transistor is high, thereby improving switching efficiency of the switching transistors (including the first switching transistor Q1 and the second switching transistor Q2), and enhancing use performance of the BUCK converter 100.

In some examples, as shown in FIG. 5, the BUCK converter 100 further includes a control device 120. For example, the control device 120 may include a control circuit, a drive circuit, or the like. A first output end 120a of the control device 120 is electrically connected to a control end Q13 of the first switching transistor Q1, and a second output end 120b of the control device 120 is electrically connected to a control end Q23 of the second switching transistor Q2.

For example, the first end Q11 of the first switching transistor Q1 may be a source of the N-channel-type MOSFET, the second end Q12 of the first switching transistor Q1 may be a drain of the N-channel-type MOSFET, and the control end Q13 of the first switching transistor Q1 may be a gate of the N-channel-type MOSFET. The first end Q21 of the second switching transistor Q2 may be a source of the N-channel-type MOSFET, the second end Q22 of the second switching transistor Q2 may be a drain of the N-channel-type MOSFET, and the control end Q23 of the second switching transistor Q2 may be a gate of the N-channel-type MOSFET.

As shown in FIG. 5, the first output end 120a of the control device 120 is electrically connected to the control end Q13 of the first switching transistor Q1, so that the control device 120 can control the first switching transistor Q1 to be turned on or off. The second output end 120b of the control device 120 is electrically connected to the control end Q23 of the second switching transistor Q2, so that the control device 120 can control the second switching transistor Q2 to be turned on or off. In this way, the first switching transistor Q1 and the second switching transistor Q2 can control charging or discharging of the energy storage component 110 (the inductor L).

In some examples, the control device 120 may send a first control signal to the control end Q13 of the first switching transistor Q1, to control the first switching transistor Q1 to be turned on or off. In addition, the control device 120 may send a second control signal to the control end Q23 of the second switching transistor Q2, to control the second switching transistor Q2 to be turned on or off. For example, the first control signal and the second control signal may be pulse signals.

The following uses examples to describe control logic of the control device 120 for the first switching transistor Q1 and the second switching transistor Q2 in some implementations of this application.

For example, an input voltage of the BUCK converter 100 (that is, the output voltage of the silicon-based negative electrode battery 210) is represented as Vin, and a unit is V; a battery voltage of the silicon-based negative electrode battery 210 is represented as VBAT, and a unit is V; a maximum current flowing through the BUCK converter 100 is represented as I, and a unit is A (ampere); resistance of the BUCK converter 100 is represented as R, and a unit is Ω (ohm); a reserved safe voltage is represented as δV, and a unit is V; and a reserved undervoltage point voltage is represented as βV, and a unit is V. An operating voltage of the load 220 when the load 220 works in a stable state is represented as Va, and a unit is V. A minimum voltage at which the load 220 can work normally is represented as Va-Vb, where Vb is a positive number, and a unit is V.

It may be understood that the reserved safe voltage δV is a positive number, and the reserved safe voltage δV may change with a change of an operating status of the load 220. For example, the reserved safe voltage δV may be equal to VBAT-IR-Va. That is, the reserved safe voltage is set based on a difference between VBAT and IR.

The reserved undervoltage point voltage βV is a positive number, and the reserved undervoltage point voltage βV may change with the change of the operating state of the load 220. For example, the reserved undervoltage point voltage βV may be equal to VBAT-IR-δV-Vb. That is, the reserved undervoltage point voltage βV is reserved based on VBAT-IR-δV.

It may be understood that values of the reserved safe voltage δV and the reserved undervoltage point voltage βV may be the same or may be different. Values of the reserved safe voltage δV and the reserved undervoltage point voltage βV are not further limited in this embodiment of this application.

For example, when Vin<VBAT-IR-δV-βV, that is, the input voltage of the BUCK converter 100 is less than the minimum voltage at which the load 220 can work normally, it may be determined that the BUCK converter 100 or the silicon-based negative electrode battery 210 is in an abnormal state. In this case, the control device 120 may control the first switching transistor Q1 and the second switching transistor Q2 to be turned off, so that the silicon-based negative electrode battery 210 and the BUCK converter 100 can be disconnected from the load 220, to protect the load 220 and reduce a risk of damage to the load 220.

When Vin≥VBAT-IR-δV-βV, that is, the input voltage of the BUCK converter 100 is greater than or equal to the minimum voltage at which the load 220 can work normally, the load 220 is in a normal operating state. In this case, the control device 120 may control the first switching transistor Q1 and the second switching transistor Q2 to be alternately turned on, so that the BUCK converter 100 can provide a stable direct current voltage for the load 220.

It may be understood that the foregoing control logic is used, and the undervoltage point voltage βV is reserved based on a difference between the battery voltage VBAT, a voltage drop (namely, IR) of the BUCK converter 100, and the reserved safe voltage δV, so that a risk that the first switching transistor Q1 and the second switching transistor Q2 are turned off when the load 220 works normally is reduced, and stability of the BUCK converter 100 is improved.

In some examples, as shown in FIG. 5, the BUCK converter 100 further includes a BUCK power supply 130, and the BUCK power supply 130 is electrically connected to a power supply input end 120c of the control device 120.

It may be understood that the BUCK power supply 130 is set to be electrically connected to the power supply input end 120c of the control device 120, so that the BUCK power supply 130 can supply power to the control device 120, and the control device 120 can control the first switching transistor Q1 and the second switching transistor Q2 to be turned on or off.

In some examples, as shown in FIG. 5, the BUCK converter 100 further includes a drive circuit 140. The drive circuit 140 is electrically connected to the BUCK power supply 130 and the control device 120, and the BUCK power supply 130 provides a drive voltage for the control device 120 through the drive circuit 140.

With such deposition, the BUCK power supply 130 can provide the drive voltage for the control device 120, so that the control device 120 can provide a drive voltage for the control ends of the switching transistors (including the first switching transistor Q1 and the second switching transistor Q2), to control the switching transistors (including the first switching transistor Q1 and the second switching transistor Q2) to be turned on.

In some examples, an output voltage of the BUCK power supply 130 is greater than the output voltage of the silicon-based negative electrode battery 210.

It may be understood that the output voltage of the BUCK power supply 130 is set to be greater than the output voltage of the silicon-based negative electrode battery 210, so that the BUCK power supply 130 can provide a high-level voltage for the control device 120, and the control device 120 can provide a high-level voltage for the control ends of the switching transistors (including the first switching transistor Q1 and the second switching transistor Q2). In this way, gate voltages (voltages at the control ends of the switching transistors) of the N-channel-type MOSFETs (namely, the first switching transistor Q1 and the second switching transistor Q2) can be greater than source voltages (voltages at the first ends of the switching transistors) of the N-channel-type MOSFETs, so that the control device 120 can control the switching transistors (including the first switching transistor Q1 and the second switching transistor Q2) to be turned on.

That is, the output voltage of the BUCK power supply 130 is set to be greater than the output voltage of the silicon-based negative electrode battery 210, so that the BUCK power supply 130 can provide the high-level voltage for the control device 120, and the control device 120 can control the switching transistors (including the first switching transistor Q1 and the second switching transistor Q2) to be turned on.

In some examples, as shown in FIG. 5, the drive circuit 140 includes a diode D1 and a second capacitor C2. An anode D11 of the diode D1 is electrically connected to the BUCK power supply 130, a cathode D12 of the diode D1 is electrically connected to a drive input end 120d of the control device 120 and a first end C21 of the second capacitor C2, and a second end C22 of the second capacitor C2 is electrically connected to the second end Q12 of the first switching transistor Q1.

It may be understood that the diode D1 can implement a reverse cut-off function, and the second capacitor C2 can implement an energy storage function. The foregoing disposing manner is used, so that the BUCK power supply 130 can provide the high-level voltage for the control device 120 through the drive circuit 140, the control device 120 can provide the high-level drive voltage for the control ends of the switching transistors (including the first switching transistor Q1 and the second switching transistor Q2), and the control device 120 can control the switching transistors (including the first switching transistor Q1 and the second switching transistor Q2) to be turned on. In addition, a risk that a current flows in a direction from the second capacitor C2 to the diode D1 is reduced, and use reliability of the BUCK converter 100 is provided.

In some examples, the BUCK converter 100 may include a printed circuit board (Printed Circuit Board, PCB for short). For example, the first switching transistor Q1, the second switching transistor Q2, the energy storage component 110, the control device 120, the BUCK power supply 130, the drive circuit 140, and the like may be disposed on a same PCB board. Alternatively, at least two of the first switching transistor Q1, the second switching transistor Q2, the energy storage component 110, the control device 120, the BUCK power supply 130, and the drive circuit 140 may be disposed on different PCB boards.

In conclusion, embodiments of this application have at least the following beneficial effect.

In this embodiment of this application, both the first switching transistor Q1 and the second switching transistor Q2 are set as N-channel-type metal-oxide semiconductor field-effect transistors, and on-resistance of the N-channel-type metal-oxide semiconductor field-effect transistor is small. Compared with a related technology in which the first switching transistor Q1 is set as a P-channel-type metal-oxide semiconductor field-effect transistor, a loss and a heat dissipation amount of the BUCK converter 100 can be reduced, especially when the output voltage of the silicon-based negative electrode battery 210 is low, and the current flowing through the BUCK converter 100 is large, the loss and the heat dissipation amount of the BUCK converter 100 can be reduced, and circuit efficiency of the BUCK converter 100 can be improved. In addition, switching efficiency of the N-channel-type metal-oxide semiconductor field-effect transistor is high, thereby improving switching efficiency of the switching transistors (including the first switching transistor Q1 and the second switching transistor Q2), and enhancing use performance of the BUCK converter 100.

The foregoing descriptions are merely specific implementations of this application, but are not intended to limit the protection scope of this application. Any variation or replacement figured out by a person skilled in the art within the technical scope disclosed in this application shall fall within the protection scope of this application. Therefore, the protection scope of this application shall be subject to the protection scope of the claims.

## Claims

1. A BUCK converter, used in an electronic device, wherein the electronic device comprises a silicon-based negative electrode battery and a load, the silicon-based negative electrode battery is electrically connected to an input end of the BUCK converter, and an output end of the BUCK converter is electrically connected to the load;
the BUCK converter comprises a first switching transistor, a second switching transistor, and an energy storage component; a first end of the first switching transistor is electrically connected to the silicon-based negative electrode battery, a second end of the first switching transistor is electrically connected to a first end of the energy storage component and a first end of the second switching transistor, and a second end of the energy storage component is electrically connected to a second end of the second switching transistor; and the energy storage component is electrically connected to the load, and the first switching transistor and the second switching transistor are configured to control charging or discharging of the energy storage component; and
both the first switching transistor and the second switching transistor are N-channel-type metal-oxide semiconductor field-effect transistors.

2. The BUCK converter according to claim 1, further comprising:
a control device, wherein a first output end of the control device is electrically connected to a control end of the first switching transistor, and a second output end of the control device is electrically connected to a control end of the second switching transistor.

3. The BUCK converter according to claim 2, further comprising:
a BUCK power supply, wherein the BUCK power supply is electrically connected to a power supply input end of the control device.

4. The BUCK converter according to claim 3, further comprising:
a drive circuit, wherein the drive circuit is electrically connected to the BUCK power supply and the control device, and the BUCK power supply provides a drive voltage for the control device through the drive circuit.

5. The BUCK converter according to claim 4, wherein an output voltage of the BUCK power supply is greater than an output voltage of the silicon-based negative electrode battery.

6. The BUCK converter according to claim 4 or 5, wherein the drive circuit comprises a diode and a second capacitor; and an anode of the diode is electrically connected to the BUCK power supply, a cathode of the diode is electrically connected to a drive input end of the control device and a first end of the second capacitor, and a second end of the second capacitor is electrically connected to the second end of the first switching transistor.

7. The BUCK converter according to any one of claims 1 to 6, further comprising a first capacitor, wherein a first end of the first capacitor is electrically connected to the second end of the energy storage component and a first end of the load, and a second end of the first capacitor is electrically connected to a second end of the load and the second end of the second switching transistor.

8. The BUCK converter according to any one of claims 1 to 7, wherein the energy storage component comprises an inductor.

9. An electronic device, comprising:
a silicon-based negative electrode battery;
the BUCK converter according to any one of claims 1 to 8, wherein the silicon-based negative electrode battery is electrically connected to an input end of the BUCK converter; and
a load, wherein an output end of the BUCK converter is electrically connected to the load.

10. The electronic device according to claim 9, wherein a minimum operating voltage of the silicon-based negative electrode battery is less than 3.2 V.
